Europäisches Patentamt

(19) European Patent Office

Office européen des brevets

(11) Veröffentlichungsnummer: **0 136 663**
A2

(12) # EUROPÄISCHE PATENTANMELDUNG

(21) Anmeldenummer: 84111568.6

(51) Int. Cl.⁴: **H 04 L 25/49**

(22) Anmeldetag: 27.09.84

(30) Priorität: 30.09.83 DE 3335564

(43) Veröffentlichungstag der Anmeldung:
10.04.85 Patentblatt 85/15

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Gieck, Reiner, Dipl.-Ing.
Nimrodstrasse 26
D-8034 Germering(DE)

(72) Erfinder: Haass, Adolf
Eichelhäherstrasse 54
D-8000 München 60(DE)

(54) Übertragungssystem zur Übertragung AMI-codierter Signale.

(57) In der sendeseitigen Einrichtung des erfindungsgemäßen Übertragungssystems werden binärcodierte Nutzdaten in AMI-codierte Signale umgewandelt. Zur Übertragung von Signalisierungsbits "1" wird ein Polaritätswechsel der AMI-codierten Signale gegebenenfalls nach einem ersten Signalelement "1" der binärcodierten Nutzdatensignalelementfolge erst nach zwei polaritätsgleichen Signalelementen "1" bewirkt, während zur Übertragung von Signalisierungsbits "0" ein Polaritätswechsel der AMI-codierten Signale nach jedem Signalelement "1" bewirkt wird.

In der der empfangsseitigen Einrichtung des Zeitmultiplexsystems wird die übertragene AMI-codierte Signalfolge überprüft, indem die Polaritäten jeweils dreier aufeinanderfolgender Signalelemente "1" gespeichert und die Polaritäten des ersten und dritten Signalelements "1" dieser aus drei Signalelementen "1" bestehenden Gruppen miteinander verglichen werden. Signalisierungsbits "1" bzw. "0" zeigen sich durch unterschiedliche bzw. gleiche Polaritäten des jeweils ersten und dritten Signalelements "1".

## FIG 2

EP 0 136 663 A2

## Übertragungssystem zur Übertragung AMI-codierter Signale

Die Erfindung betrifft ein Übertragungssystem zur Übertragung AMI-codierter Signale, das aus einer sendeseitigen Einrichtung und einer mit ihr über eine Übertragungsstrecke verbundenen empfangsseitigen Einrichtung
besteht, wobei sendeseitig dem System zugeführte binärcodierte Nutzdaten in AMI-codierte Signale umgewandelt
und empfangsseitig die über die Übertragungsstrecke übertragenen AMI-codierten Signale rückgewandelt und dem
System als binärcodierte Nutzdaten entnommen werden und
wobei die AMI-codierten Signale sendeseitig mit einer
zusätzlichen Signalisierungsinformation versehen werden.

In bekannten Anordnungen werden zu übertragende Nutzdaten
nach der AMI-Codierregel codiert und gemeinsam in sogenannten Envelops oder Rahmen mit je einem der Signalisierung
dienenden Statusbit und einem den Rahmenanfang markierenden
Synchronisierbit übertragen. Das sendeseitige Einfügen und
das empfangsseitige Ausblenden des Status- und Synchronisierbits erfordert eine besondere schaltungstechnische
Realisierung. Durch die beiden zusätzlich pro Rahmen übertragenen Bits wird die für die Übertragung der Nutzdaten
zur Verfügung stehende Kapazität eingeschränkt, die sich
in der Senkung der auf die Nutzdaten bezogenen mittleren
Übertragungsgeschwindigkeit (Netto- statt Bruttogeschwindigkeit) äußert.

Die Erfindung zeigt demgegenüber einen Weg, zusätzlich
zu AMI-codierten Nutzdaten für die Signalisierung und
Rahmenkennung notwendige Informationen ohne eine Verringerung der Übertragungsgeschwindigkeit zu übertragen.

Erfindungsgemäß wird dazu zur Übertragung von Signalisierungsbits "1" ein Polaritätswechsel der AMI-codierten
Signale gegebenenfalls nach einem ersten Signalelement

D1/27.9.83

83 P 1798 E

0136663

"1" der binärcodierten Nutzdatensignalelementfolge erst
nach jeweils zwei polaritätsgleichen Signalelementen bewirkt
wird, während zur Übertragung von Signalisierungsbits "0"
ein Polaritätswechsel der AMI-codierten Signale nach jedem
Signalelement "1" bewirkt wird.

Die Erfindung zeichnet sich durch den Vorteil aus, daß
Schaltmittel für das Einfügen bzw. Ausblenden von Signalisierungs- bzw. Synchronisierbits nicht vorzusehen
sind und gleichzeitig die Nutzdaten mit höheren Geschwindigkeiten übertragen werden können.

Es sei an dieser Stelle bemerkt, daß eine absichtliche
Verletzung der AMI-Regel (IRMER, KERSTEN, SCHWEIZER
Begriffe der Digital-Übertragungstechnik, Frequenz 32
(1978), Heft 8 bis 10) zur Vermeidung längerer Nullserien bekannt ist. So werden beispielsweise beim HDB3-
Code vier unmittelbar aufeinanderfolgende binäre Nullwerte durch 000V oder A00V ersetzt, wobei V einen Impuls darstellt, der eine Verletzung der AMI-Regel bewirkt, und A einen AMI-Impuls, d.h. einen Impuls, dessen
Polarität der AMI-Regel (Binärwerte 1 werden abwechselnd
durch Impulse mit positiver und negativer Spannung
wiedergegeben, die Binärwerte 0 durch die Spannung Null)
entspricht. Die Wahl der Konfiguration 000V oder A00V
geschieht so, daß die V-Impulse in ihrer Polarität
abwechseln.

Probleme der gemeinsamen Übertragung von Nutz- und
Signalisierungs- sowie Synchronisierungsdaten werden
dabei jedoch nicht berührt.

Anhand der Zeichnungen wird die Erfindung nun in einem
zum Verständnis erforderlichen Umfang näher erläutert.
Dabei zeigt
Fig. 1 ein Ausführungsbeispiel eines Übertragungssystems
gemäß der Erfindung in Blockdarstellung:
Fig. 2 ein Ausführungsbeispiel einer sendeseitigen Einrichtung des erfindungsgemäßen Übertragungssystems:

Fig. 3 den zeitlichen Verlauf ausgewählter Signalelementfolgen in der sendeseitigen Einrichtung nach Fig. 2:
Fig. 4 ein Ausführungsbeispiel einer empfangsseitigen Einrichtung des erfindungsgemäßen Übertragungssystems:
Fig. 5 den zeitlichen Verlauf ausgewählter Signalelementfolgen in der empfangsseitigen Einrichtung nach Fig. 4.


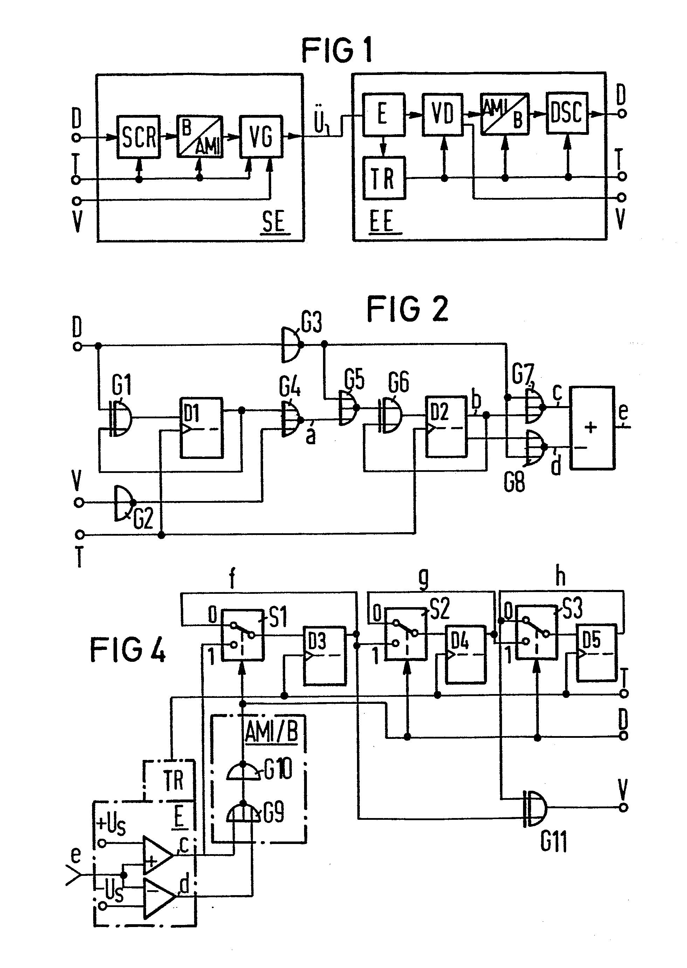

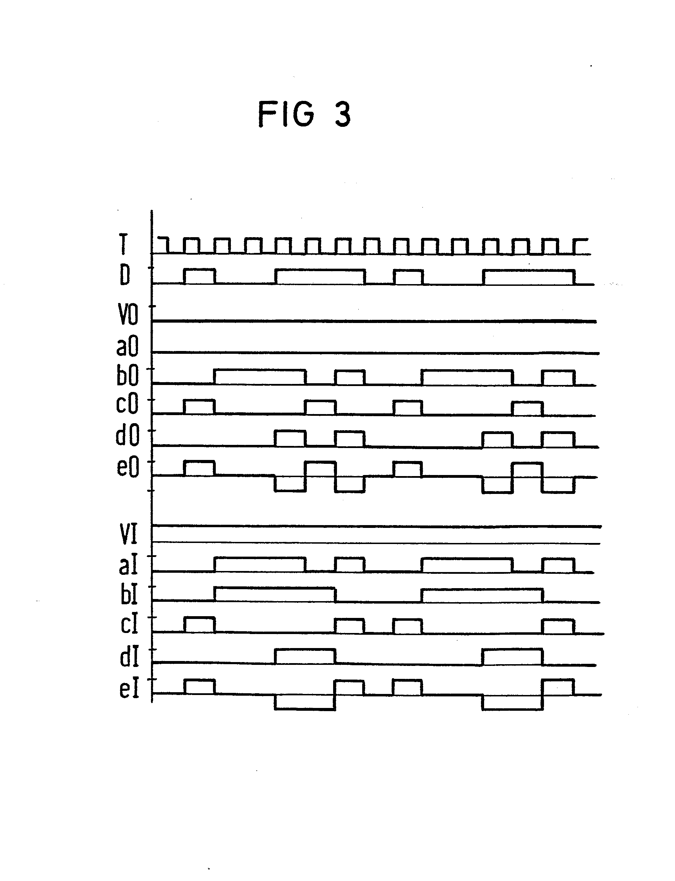

Das in Fig. 1 schematisch dargestellte Übertragungssystem
gemäß der Erfindung besteht aus einer sendeseitigen Einrichtung SE und einer mit ihr über eine Übertragungsstrecke
Ü verbundenen empfangsseitigen Einrichtung EE.
Ddie sendeseitige Einrichtung SE weist an ihrem Eingang
gegebenenfalls einen Scrambler SCR auf, der die ihm zugeführten Signale in bekannter Weise nach einem vorgegebenen
Algorithmus verwürfelt. Die gegebenenfalls verwürfelten
Signale werden einem B/AMI-Codierer zugeführt, die die ursprünglich binärcodierten Nutzdaten D in AMI-codierte
Signale umwandelt. Die AMI-codierten Signale werden einem
Violationsgenerator VG zugeführt, der einen Steuereingang
V aufweist.
Zur zusätzlichen Übertragung von Signalisierungsbits "1"
wird der sendeseitigen Einrichtung SE über den Steuereingang V ein sogenanntes Violationssignal "1" (VI in Fig. 3)
zugeführt: zur zusätzlichen Übertragung von Signalisierungsbits "0" wird der sendeseitigen Einrichtung SE über den
Steuereingang V ein Violationssignal "0" (VO in Fig. 3)
zugeführt. Ein in Fig. 1 nicht dargestelltes, dem Violationsgenerator VG nachgeschaltetes Sendefilter bereitet das vom
Violationsgenerator VG abgegebene Signal für die Übertragung
auf und gibt es als Sendesignal an die Übertragungsstrecke
Ü ab.


Das Sendesignal gelangt an die empfangsseitige Einrichtung
EE, die an ihrem Eingang eine in der Zeichnung nicht dargestellte Empfangsschaltung aufweisen kann: außerdem umfaßt
die empfangsseitige Einrichtung EE einen Entscheider E,
einen damit verbundenen Taktregenerator TR, einen Violationsdetektor VD, einen AMI/B-Decodierer und gegebenenfalls einen Descrambler DSC.

Die Empfangsschaltung entzerrt und verstärkt die von der Sendeseite übertragenen Signale, so daß diese in der empfangsseitigen Einrichtung EE einer weiteren Verarbeitung zugänglich sind.

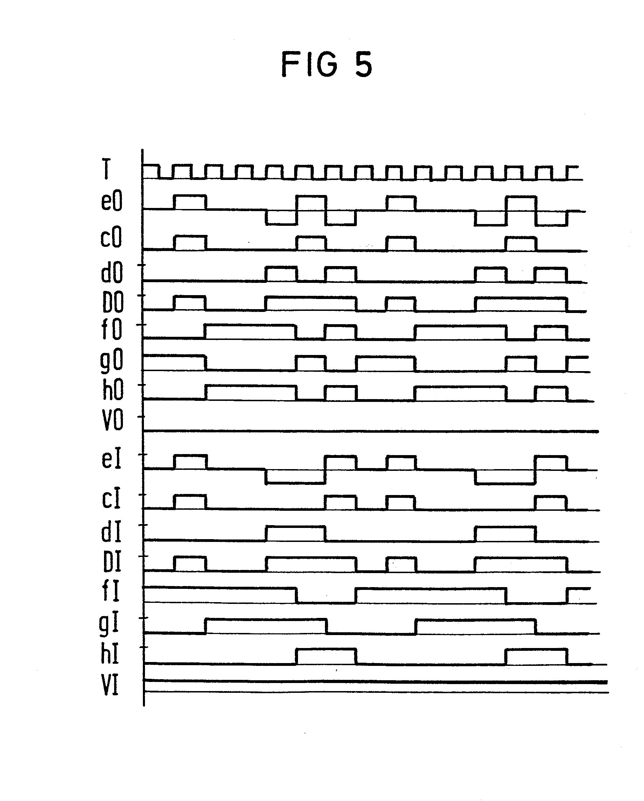

Im Entscheider E werden, wie noch anhand der Fig. 4 und 5 dargestellt wird, aus der AMI-codierten Signalfolge zwei Teilsignalfolgen gebildet. Daneben dient der Entscheider E in Verbindung mit dem Taktregenerator TR der Taktrückgewinnung. Die Taktrückgewinnung kann auch bereits mit Hilfe der Empgangsschaltung erfolgen. Der rückgewonnene Takt steuert den Violationsdetektor VD, den AMI/B-Decodierer und den Descrambler DSC. Ein am Ausgang V des dem Entscheider E nachgeschalteten Violationsdetektors VD erscheinendes Violationssignal V "1" zeigt Signalisierungsbits "1" an, während ein am Ausgang V erscheinendes Violationssignal V "0" Signalisierungsbits "0" anzeigt.

Der AMI/B-Decodierer wandelt die AMI-codierten Signale in binärcodierte Signale zurück. Die Signale werden, sofern sendeseitig eine Verwürfelung vorgenommen wurde, dem Descrambler DSC zugeführt, der die Verwürfelung beseitigt. Am Ausgang der empfangsseitigen Einrichtung EE sind die binärcodierten Nutzdaten D, der Takt T sowie das Violationssignal "0" oder "1" verfügbar.

Das Ausführungsbeispiel einer sendeseitigen Einrichtung SE in Fig. 2 ist ohne Scrambler SCR und ohne Sendefilter dargestellt. Die Schaltungsanordnung, die der Umwandlung binärcodierter Nutzdaten in AMI-codierte Signale und deren zeitweiliger Violation dient, möge zwei D-Flipflops D1 und D2, sechs Gatter G1, G4 bis G8 zur Realisierung verschiedener logischer Verknüpfungen, zwei Inverter G2 und G3 sowie ein Summationsglied umfassen.

Sie hat drei Eingänge D, V und T, die der Zuführung von Nutzdaten D, Violationssignalen V und Taktimpulsen T dienen.

Ein Exklusiv-ODER-Gatter G1 liegt mit einem seiner beiden Eingänge am Eingang D der sendeseitigen Einrichtung SE, mit dem anderen Eingang am nichtinvertierenden Ausgang des Flipflops D1. Ein Inverter G2 ist eingangsseitig mit dem Eingang V der sendeseitigen Einrichtung SE verbunden; sein Ausgang führt an den einen Eingang eines NOR-Gatters G4. Der andere Eingang des Gatters G4 ist mit dem Ausgang des Flipflops D2 verbunden. Ein Inverter G3 liegt eingangsseitig am Eingang D der sendeseitigen Einrichtung SE, ausgangseitig liegt er an jeweils einem der beiden Eingänge der NOR-Gatter G5, G7 und G8. Der Ausgang des Gatters G4 führt zum zweiten Eingang des Gatters G5; dessen Ausgang liegt an dem einen der beiden Eingänge eines Exklusiv-ODER-Gatters G6. Das Flipflop D2 ist an seinem Eingang mit dem Ausgang des Gatters G6 verbunden, der nichtinvertierende Ausgang des Flipfolps D2 ist jeweils mit dem zweiten Eingang der Gatter G6 und G7 verbunden. Der invertierende Ausgang des Flipflops D2 führt auf das Gatter G8. Dem Summationsglied wird über einen Eingang die am Ausgang des Gatters G7 erscheinende Signalelementfolge, über den anderen, negierten Eingang, die am Ausgang des Gatters G8 erscheinende Signalelementfolge zugeführt. Der Eingang T der sendeseitigen Einrichtung SE ist unmittelbar mit den Taktimpulseingängen der Flipflops D1 und D2 verbunden.

Der sendeseitigen Einrichtung SE werden über ihren Eingang D das in Fig. 3, Zeile D, dargestellte binärcodierte Nutzdatensignal und über den Eingang T die in Fig. 3, Zeile T, dargestellten Taktimpulse T zugeführt.

Am Eingang V können Signalisierungsbits "1" (Fig. 3, Zeile VI) oder Signalisierungsbits "0" (Fig. 3, Zeile VO) eingegeben werden.

Im letzteren Fall wird am Eingang V ein aus Signalelementen "0" bestehendes Violationssignal VO zugeführt. Der Inverter G2 bewirkt in Verbindung mit dem Gatter G4, daß an dessen Ausgang a ebenfalls eine Folge von Signalelementen "0" entsteht (Fig. 3, Zeile a0). In diesem Fall gelangen die Nutzdaten D über den Inverter G3 und G5 unverändert an den Eingang des Gatters G6. Das Exklusiv-ODER - Gatter G6 und das Fliflop D2 bewirken, daß an dessen Ausgang b eine neue, aus der Nutzdatensignalelementfolge abgeleitete Signalelementfolge (Fig. 3, Zeile b0) auftritt, wobei Nutzdatensignalelemente "0" zu keinem Wechsel des Zustands des Flipflops D2 führen, während umgekehrt Nutzdatensignalelemente "1" einen solchen Wechsel herbeiführen. Wie aus Fig. 3, Zeilen D und b0, ersichtlich ist, bewirkt das erste Nutzdatensignalelement "0" keinen Zustandswechsel in der Signalelementfolge b0, so daß diese Signalelementfolge zunächst zwei Signalelemente "0" aufweist. Das zweite Nutzdatensignalelement "1" führt zu einem Wechsel in der Signalelementfolge b0 von "0" auf "1". Das dritte Signalelement der Signalelementfolge b0 ist somit ein Signalelement "1". Das dritte Nutzdatensignalelement ist ein Signalelement "0" und bewirkt keinen Wechsel in der Signalelementfolge b0, so daß auch das vierte Signalelement der Signalelementfolge b0 ein Signalelement "1" ist.

An die Eingänge der Gatter G7 und G8 werden einerseits die negierte Nutzdatensignalelementfolge, (also $\overline{D}$), geschaltet und andererseits die Signalelementfolge b0 (bzw. $\overline{b0}$). Die an den Ausgängen der Gatter G7 und G8 erscheinenden Signalelementfolgen sind in Fig. 3, Zeilen

cO und dO dargestellt. Die beiden Signalelementfolgen cO und dO bilden dabei Teilsignale in die die ursprüngliche binärcodierte Nutzdatensignalelementfolge D (Fig. 2, Zeile D) gewissermaßen aufgespalten ist. Beide Signalelementfolgen werden dem Summationsglied zugeführt, wobei die Signalelementfolge d an dessen Minuseingang geschaltet wird. Die Signalelementfolge e am Ausgang des Summationsgliedes stellt die ursprünglich binärcodierten Nutzdaten (Fig. 3, Zeile D) in AMI-codierter Form dar (Fig. 3, Zeile eO).

Liegen Signalisierungsbits "O" am Eingang V, so bleiben das Gatter G1 und das Flipflop D1 ohne Einfluß; die sendeseitige Einrichtung SE wirkt in diesem Fall als bloßer B/AMI-Codierer.

Liegen dagegen Signalisierungsbits "1" am Eingang V der sendeseitigen Einrichtung SE, so wird die AMI-codierte Nutzdatensignalelementfolge verändert (Fig. 3, Zeilen VI und eI). Die durch den Inverter G2 aus dem Violationssignal VI erzeugte Signalelementfolge "O" bewirkt, daß die am Ausgang des Flipflops D1 erscheinende Signalelementfolge am Ausgang des Gatters G4 negiert auftritt. Das Gatter G1 und das Flipflop D1 wirken jetzt wie das Gatter G6 und das Flipflop D1, wenn am Eingang V Signalisierungsbits "O" anstehen. Setzt man beispielsweise voraus, daß dem ersten Signalelement "O" der Nutzdatensignalelementfolge (Fig. 3, Zeile D) ein Signalelement "1" vorausgeht, so stellt sich am Ausgang des Gatters G4 die in Fig. 3, Zeile aI, dargestellte Signalelementfolge ein. Am Ausgang des Gatters G5 ergibt sich nur dann ein Signalelement "1", wenn sowohl am Ausgang des Gatters G4 als auch in der negierten Nutzdatensignalelementfolge ($\overline{D}$) ein Signalelement "O" erscheint, wenn also sowohl am Ausgang des Flipflops D1 als auch in der Nutzdatensignalelementfolge D ein Signalelement "1" erscheint. Diese am Ausgang des Gatters G5 und damit am Eingang von G6 auftretenden Signalelemente "1" erzeugen in Verbindung mit dem Flipflop D2 die in Fig. 3, Zeile bI dargestellte Signalelementfolge. Diese Signalelementfolge bI (bzw. $\overline{bI}$) wird ausgangsseitig am Flipflop D2 abgegeben und jeweils einem Eingang des Gatters G7 bzw. G8 zugeführt. Am anderen Eingang des Gatters G7 bzw. G8 liegt die negierte Nutzdatensignalelementfolge ($\overline{D}$). Auf diese Weise wird die ursprünglich binärcodierte Nutzdatensignalelementfolge D (Fig. 3, Zeile D) in zwei Teilsignale c und d (Fig. 3, Zeilen cI und dI) aufgespalten, wobei jedenfalls nach dem eingeschwungenen Zustand des Übertragungssystems nach dem ersten in der binärcodierten Nutzdatensignalelementfolge auftretenden Signalelement "1" jedes Teilsignal c bzw. d abwechselnd aus Signalelementgruppen von je zwei Signalelementen "1" besteht, die entsprechend der Nutzdatensignalelementfolge D unmittelbar aufeinanderfolgen oder durch Signalelemente "0" getrennt sind. Schließlich wird dem den Gattern G7 und G8 nachgeschalteten Summationsglied an dessen Pluseingang die Signalelementfolge c und an dessen Minus-Eingang die Signalelementfolge d zugeführt. Die resultierende Signalelementfolge e am Ausgang des Summationsgliedes stellt die Nutzdatensignalelementfolge in AMI-codierter Form dar, wobei jedenfalls nach dem eingeschwungenen Zustand des Übertragungssystems nach dem ersten Signalelement "1" der binärcodierten Nutzdatensignalelementfolge ein Polaritätswechsel der AMI-codierten Signale erst nach zwei polaritätsgleichen Signalelementen bewirkt wird.

Die AMI-codierte und dabei in Abhängigkeit vom Auftreten von Signalisierungsbits "1" violierte Signalelementfolge e gelangt über die Übertragungsstrecke Ü an die empfangsseitige Einrichtung EE. Dort können die von der sendeseitigen Einrichtung SE übertragenen Signale, wie bereits beschrieben, zunächst in einer Empfangsschaltung entzerrt und verstärkt werden.

Das in Fig. 4 dargestelle Ausführungsbeispiel einer
empfangsseitigen Einrichtung EE umfaßt einen Entscheider E, einen mit diesem verbundenen Taktregenerator TR,
eine Violationsdetektorschaltung VD einen AMI/B-Decodierer sowie gegebenenfalls einen Descrambler DSC, der
die sendeseitig vorgenommene Verwürfelung beseitigt.

Der Entscheider E besteht aus zwei Operationsverstärkern.
Eingangsseitig wird ein Operationsverstärker an seinem
Pluseingang mit der Signalelementfolge eO bzw. eI
(Fig. 5, Zeile eO bzw. eI), an seinem Minuseingang mit
einer Schwellspannung $+U_s$ beaufschlagt; der andere Operationsverstärker wird an seinem Pluseingang mit der
Schwellspannung $-U_s$, an seinem Minuseingang mit der
Signalelementfolge eO bzw. eI beaufschlagt. Ausgangsseitig liefert der eine Operationsverstärker die Signalelementfolge cO bzw. cI (Fig. 5, Zeile cO bzw. cI), der
andere Operationsverstärker die Signalelementfolge dO
bzw. dI (Fig. 5, Zeile dO bzw. dI). Der mit dem Entscheider E verbundene Taktregenerator TR regeneriert
den Takt T, der sowohl, wie im folgenden beschrieben
wird, der Violationsdetektorschaltung VD als auch dem
Ausgang T der empfangsseitigen Einrichtung EE zugeführt
wird.

Der AMI/B-Decodierer weist im Beispiel ein NOR-Gatter
G9 auf, das an seinen beiden Eingängen mit den Ausgängen der den Entscheider E bildenden Operationsverstärker verbunden ist. Der Ausgang des Gatters G9 führt
auf den Eingang des Inverters G10, der die (binäre)
Nutzdatensignalelementfolge D liefert.

Die Violationsdetektorschaltung VD besteht aus drei
vom Takt T gesteuerten Flipflops D3, D4 und D5, aus

0136663

aus drei Schalteinrichtungen S1, S2 und S3, die von
der Nutzdatensignalelementfolge D gesteuert werden,
sowie aus einem Exklusiv-ODER-Gatter G11. Jede Schalteinrichtung S1, S2 und S3 weist zwei, mit "0" und "1"
bezeichnete Eingänge auf, wobei der Eingang "0" der
Schalteinrichtung S1 mit dem Ausgang des Flipflops D3,
der Eingang "0" der Schalteinrichtung S2 mit dem Ausgang des Flipflops D4 und der Eingang "0" der Schalteinrichtung S3 mit dem Ausgang des Flipflops D5 verbunden ist. Dem Eingang "1" von S1 wird die Signalelementfolge cO bzw. cI zugeführt (Fig. 5, Zeile cO bzw.
cI). Der Eingang "1" der Schalteinrichtung S2 ist mit
dem Ausgang des Monoflops D3 und somit auch mit Eingang
"0" der Schalteinrichtung S1 verbunden, der Eingang "1"
der Schalteinrichtung S3 ist mit dem Ausgang des Monoflops D4 und somit auch mit dem Eingang "0" der Schaleinrichtung S2 verbunden. Schließlich führen die Ausgänge der Monoflops D3 und D5 auf das Gatter G11, das
an seinem Ausgang V die Signalisierungsbits "1" bzw.
"0" liefert.

Die Arbeitsweise der empfangsseitigen Einrichtung EE wird nun
für den Fall der Übertragung von Signalisierungsbits "0"
beschrieben. Die Signalelementfolge eO (Fig. 3, Zeile eO)
wird dem Entscheider E zugeführt, der an seinen beiden
Ausgängen die Signalelementfolgen cO und dO liefert
(Fig. 5, Zeilen cO und dO). Diese empfangsseitig erzeugten Signalelementfolgen cO und dO sind mit den sendeseitig an den Ausgängen der Gatter G7 und G8 erscheinenden Signalelementfolgen cO und dO identisch (vgl. Fig. 3,
Zeile cO und dO).
Die beiden Teilsignale cO und dO werden dem im Ausführungsbeispiel nach Fig. 4 durch das Gatter G9 und den
Inverter G10 gebildeten AMI/B-Decodierer zugeführt,
wobei die beiden Eingangsvariablen cO und dO nach einer
logischen ODER-Funktion verknüpft werden. Am Ausgang des AMI/B-Decodierers erscheint so die Nutzdatensignalelementfolge D (Fig. 5, Zeile DO).

Der Ausgang des AMI/B-Decodierers ist mit den Steuereingängen der Schaltungseinrichtungen S1, S2 und S3 verbunden. Ein Signalelement "O" der Nutzdatensignalelementfolge D bewirkt eine Verbindung des Eingangs "O"
mit dem Ausgang der jeweiligen Schalteinrichtung, während
ein Signalelement "1" der Nutzdatensignalelementfolge D
zu einer Durchschaltung des Eingangs "1" zum Ausgang
der jeweiligen Schalteinrichtung führt.

Ein- und Ausgang des Flipflops D3 seien zunächst
über die Schalteinrichtung S1 (Eingang "O" durchgeschaltet) miteinander verbunden. Durch das erste Signalelement "1" der Nutzdatensignalelementfolge (Fig. 5, Zeile DO) wird am Ausgang des Flipflops D3 ein Wechsel
vom ursprünglich dort anliegenden Signalelement "O"
zu einem Signalelement "1" bewirkt (Fig. 5, Zeile fO),
während die folgenden zwei Signalelemente "O" der Nutzdatensignalelementfolge (Fig. 5, Zeile DO)keine Änderung bewirken, der Ausgang des Flipflops D3 also unverändert Signalelemente "1" abgibt (Fig. 5, Zeile fO).
Die den zwei Signalelementen "O" folgenden drei Signalelemente "1" der Nutzdatensignalelementfolge (Fig. 5,
Zeile DO) bewirken drei Wechsel in der Signalelementfolge fO von "1" auf "O", von "O" auf "1" und von "1"
auf "O".

Die Nutzdatenbitfolge D (Fig. 5, Zeile DO) steuert die
Schalteinrichtungen S2 und S3 in gleicher Weise. Ein
ursprünglich am Ausgang des Flipflops D4 liegendes Signalelement "1" (Fig. 5, Zeile gO) wird beim ersten
Signalelement "1" der Nutzdatensignalfolge (Fig. 5,
Zeile DO) durch das zu diesem Zeitpunkt am Flipflop D3
vorhandene Signalelement "O" abgelöst. Die folgenden
zwei Signalelemente "O" der Nutzdatensignalelementfolge

bewirken in der Signalelementfolge g0 keine Änderung; diese weist also zwei weitere Signalelemente "0" auf. Die den zwei Signalelementen "0" folgenden drei Signalelemente "1" der Nutzdatensignalelementfolge (Fig. 5, Zeile DO) bewirken drei Wechsel der Signalelementfolge g0 von "0" auf "1", von "1" auf "0" und von "0" auf "1". Die Signalelementfolge h0 wird durch die Schalteinrichtung S3 und das Flipflop D5 analog gebildet (Fig. 5, Zeile h0).

Dem Exklusiv-ODER-Gatter G11 werden die Signalelementfolgen f0 und h0 zugeführt, die bei Anstehen von Signalisierungsbits "0" am Eingang V der sendeseitigen Einrichtung SE zu jedem Zeitpunkt identisch sind, so daß sich am Ausgang des Gatters G11 und damit am Ausgang V der empfangsseitigen Einrichtung EE eine aus Signalelementen "0" bestehende Signalelementfolge V0 (Fig. 5, Zeile V0) ergibt.

Stehen am Eingang V der sendeseitigen Einrichtung Signalisierungsbits "1" an, so wird dem Entscheider E die Signalelementfolge eI (Fig. 5, Zeile eI) zugeführt, der ausgangsseitig die Signalelementfolgen cI und dI liefert. Diese Teilsignale cI und dI sind mit den sendeseitig an den Ausgängen der Gatter G7 und G8 erscheinenden Signalelementfolgen cI und dI identisch (vgl. Fig. 3, Zeilen cI und dI). Die empfangsseitig erzeugten Signalelementfolgen cI und dI werden dem AMI/B-Decodierer zugeführt, an dessen Ausgang die binäre Nutzdatensignalelementfolge erscheint. Unabhängig von den am Eingang V der sendeseitigen Einrichtung SE anstehenden Signalisierungsbits "0" oder "1" entspricht die am Ausgang D der empfangsseitigen Einrichtung EE entnehmbare Signalelementfolge DO der dort entnehmbaren Signalelementfolge DI. DO und DI sind mit der der sendeseitigen Einrichtung SE zugeführten Nutzdatensignalelementfol-

0136663

ge D identisch (vgl. Fig. 3, Zeile D; Fig. 5, Zeilen DO und DI).

Die taktgesteuerten Flipflops D3, D4 und D5, die durch die Nutzdatensignalelementfolge gesteuerten Schalteinrichtungen S1, S2 und S3 sowie das Gatter G11 wirken wie schon beschrieben zusammen. Die Signalelementfolge fI besteht nunmehr zunächst aus Signalelementen "1" (Fig. 5, Zeile fI). Durch das erste Signalelement "1" von cI wird die Signalelementfolge fI nichtverändert. Erst das zweite Signalelement "1" der Signalelementfolge DI, das aus einem Signalelement negativer Polarität der Signalelementfolge eI abgeleitet wurde (vgl. Fig. 5, Zeilen DI und eI), bewirkt den Wechsel in der Signalelementfolge fI von "1" auf "0". Der Wechsel von "0" auf "1" in der Signalelementfolge fI wird durch das vierte Signalelement "1" der Signalelementfolge DI, der Wechsel von "1" auf "0" in der Signalelementfolge fI durch das übernächste, also sechste Signalelement "1" der Signalelementfolge DI ausgelöst (Fig. 5, Zeile fI).

Die Wechsel in der Signalelementfolge gI werden durch das erste, dritte, fünfte, usw. Signalelement "1" der Signalelementfolge DI ausgelöst (Fig. 5, Zeilen DI und gI).

Die Wechsel in der Signalelementfolge hI werden wie bei der Signalelementfolge fI durch das zweite, vierte, sechste, usw. Signalelement "1" der Signalelementfolge DI ausgelöst (Fig. 5, Zeilen DI und hI).

Die drei aus je einer Schalteinrichtung S1, S2, S3 und je einem Flipflop D3, D4, D5 bestehenden Speicherstufen f, g, h der Violationsdetektorschaltung VD speichern also die Polarität dreier aufeinanderfolgender Signalelemente "1" der AMI-codierten Signalelementfolge e.

Mittels des Gatters G11 werden die Polaritäten des ersten und dritten Signalelements "1" dieser Dreiergruppen verglichen. Sind diese Polaritäten gleich (Fig. 5, Zeile eG), liegt keine Violation vor; am Ausgang V der empfangsseitigen Einrichtung EE erscheinen Signalisierungsbits "0" (Fig. 5, Zeile VO). Sind die Polaritäten des ersten und dritten Signalelements "1" einer Dreiergruppe dagegen nicht gleich (Fig. 5, Zeile eI), so wurde die AMI-codierte Signalelementfolge e violiert, so daß am Ausgang der empfangsseitigen Einrichtung EE Signalisierungsbits "1" (Fig. 5, Zeile VI) erscheinen.

4 Patentansprüche
5 Figuren

Patentansprüche

1. Übertragungssystem zur Übertragung AMI-codierter Signale, das aus einer sendeseitigen Einrichtung und einer mit ihr über eine Übertragungsstrecke verbundenen empfangsseitigen Einrichtung besteht, wobei sendeseitig dem System zugeführte binärcodierte Nutzdaten in AMI-codierte Signale umgewandelt und empfangsseitig die über die Übertragungsstecke übertragenen AMI-codierten Signale rückgewandelt und dem System als binärcodierte Nutzdaten entnommen werden und wobei die AMI-codierten Signale sendeseitig mit einer zusätzlichen Signalisierungsinformation versehen werden, d a - d u r c h  g e k e n n z e i c h n e t , daß zur Übertragung von Signalisierungsbits "1" ein Polaritätswechsel der AMI-codierten Signale gegebenenfalls nach einem ersten Signalelement "1" der binär-codierten Nutzdatensignalelementfolge erst nach jeweils zwei polaritätsgleichen Signalelementen "1" bewirkt wird, während zur Übertragung von Signalisierungsbits "0" ein Polaritätswechsel der AMI-codierten Signale nach jedem Signalelement "1" bewirkt wird.

2. Übertragungssystem nach Anspruch 1, d a d u r c h  g e k e n n z e i c h n e t , daß in der empfangsseitigen Einrichtung (EE) die Polaritäten jeweils dreier aufeinanderfolgender Signalelemente "1" der AMI-codierten übertragenen Signale gespeichert und die Polaritäten des ersten und dritten Signalelements "1" dieser aus drei Signalelementen "1" bestehenden Gruppen miteinander verglichen werden, wobei bei der Übertragung von Signalisierungsbits "1" unterschiedliche Polaritäten, bei der Übertragung von Signalisierungsbits "0" gleiche Polaritäten des jeweils ersten und dritten Signalelements "1" auftreten.

3. Übertragungssystem nach Anspruch 1 und 2, d a -
d u r c h   g e k e n n z e i c h n e t,   daß in
der sendeseitigen Einrichtung (SE) die AMI-codierten
Signale (e0 bzw. eI) in zwei Teilsignale (c0, d0
bzw. cI, dI) aufgespalten werden, wobei Signalelemente
positiver Polarität der AMI-codierten Signale (e0 bzw.
eI) durch Signalelemente "1" des einen Teilsignals
(c0 bzw. cI) und Signalelemente negativer Polarität
der AMI-codierten Signale (e0 bzw. eI) ebenfalls durch
Signalelemente "1" des anderen Teilsignals (d0 bzw. dI)
dargestellt werden.

4. Übertragungssystem nach Anspruch 1,   d a d u r c h
g e k e n n z e i c h n e t  ,   daß in der empfangsseitigen Einrichtung (EE) aus den übertragenen AMI-
codierten Signalen (e0 bzw. eI) die zwei Teilsignale
(c0, d0 bzw. cI, dI) regeneriert werden.

## FIG 1

## FIG 2

## FIG 4

FIG 3

FIG 5